# EUROPEAN PATENT SPECIFICATION

(11) **EP 3 787 838 B1**
(45) Date of publication and mention of the grant of the patent: **03.06.2026**
(21) Application number: 19739724.3
(22) Date of filing: 11.06.2019
(51) Int. Cl.: B25B 23/142

(54) **FASTENING TOOL INSTANT TORQUE METERING ACCESSORY**
ZUBEHÖR ZUR SOFORTDREHMOMENTMESSUNG FÜR EIN BEFESTIGUNGSWERKZEUG
ACCESSOIRE DE MESURE DE COUPLE INSTANTANÉ D'OUTIL DE FIXATION

(30) Priority: 21.06.2018 IT 201800006565
(43) Date of publication of application: 10.03.2021
(73) Proprietor: Fassio, Enrico, 00123 Roma (IT)
(72) Inventor: Fassio, Enrico, 00123 Roma (IT)
(86) International application number: PCT/IT2019/050133
(87) International publication number: WO 2019/244184

(56) References cited:
- GB-A- 2 514 007
- GB-A- 2 514 007
- US-A- 4 522 075
- US-A- 4 522 075
- US-B2- 8 844 381
- US-B2- 8 844 381

## Description

### Technical field: Manual tools

In the field of manual mechanical tools, torque wrenches are tools used to apply a specific torque to a rotary fastener.

Background art: Manual torque wrenches are usable within a torque range of a few tens of Nm; these tools are made of a tubular metal body showing at the two ends, respectively, a handle and the connection fitting for various socket types and sizes. When operated, a torque wrench will give a visual indication, an aural indication, or a combination thereof when the preset torque is reached; tools equipped with a digital display will permanently show the current applied torque value.

Below is a partial list of the limits of existing torque wrenches.
- In order to withstand the mechanical stress it is subject to, when operated close to the upper end of its torque range, a torque wrench is obviously oversized with regard to the lower end of said range.
- A torque range of only a few tens of Nm does not meet the requirement of any automotive workshop, where application of torque ranging anywhere from 10 to 350 Nm is frequent; therefore at least two different torque wrenches are required.
- The shape and size of existing torque wrenches are often incompatible with narrow spaces, such as the engine compartment of a car.
- Click torque wrenches do not provide indication of the current torque value but only provide a click signal when the preset torque value is reached. Furthermore, a noisy environment might hide the click signal, which could result in excessive mechanical stress on the fastener. This overtightening condition does not happen with electronic torque wrenches, provided that the wrench's sensorial alerts are effective or that the digital screen is always visible to the operator.
- Manual torque wrenches internal mechanism never allows torque to exceed the torque range; consequently, the application of a cheater bar only reduces the operator's effort.
- Proper storage of mechanical torque wrenches requires that the load is relieved from internal spring.
- Calibration of torque wrenches require complex procedures and/or expensive equipment.

A torque measurement system is known from GB 2 514 007. It represents the closest prior art and discloses a device comprising at least one digital display on which the value of the torque produced by a force is shown, comprising: at least one sensor that detects the force intensity; at least an electronic processor unit that receives and processes the information from said sensor; by at least an input device that allows the operator to enter known and target values and to select the preferred measuring units.

Disclosure of invention: The invention is defined in claim 1. The primary purpose of the invention is to provide the great variety of fastening tools of choice with the capability of measuring applied torque, by means of a single device that can be coupled as an accessory to any of said tools in order to measure the applied torque and to show its value on a digital display. The device is meant to be placed between the hand of the operator and any fastening tool, to which the device has been coupled, so that all the force applied by the operator is entirely transferred to the tool.

Another purpose of the invention is to calculate the applied torque by electronically and directly measure both its components: the force and its lever arm.

Another purpose of the invention is a versatile coupling system which allows the device to be easily joined to a small spanner or a long lever.

Another purpose of the invention are the device's extremely small dimensions which, not significantly altering the hosting tool overall dimensions, does not preclude its use in restricted spaces.

Another purpose of the invention is to allow a continuous control of the current torque by means of a digital display that, being not rigidly connected to the device, remains always visible to the operator.

Another purpose of the invention is a torque measuring instrument which is simple, light an small so that production and transport costs are significantly lower than what the market currently offers.

Another purpose of the invention is the simplicity of the calibration procedures that do not require special equipment and/or specific skills.

All these and other objects which will result from the following description are reached, according to the invention, with a device as characterized in the claims.

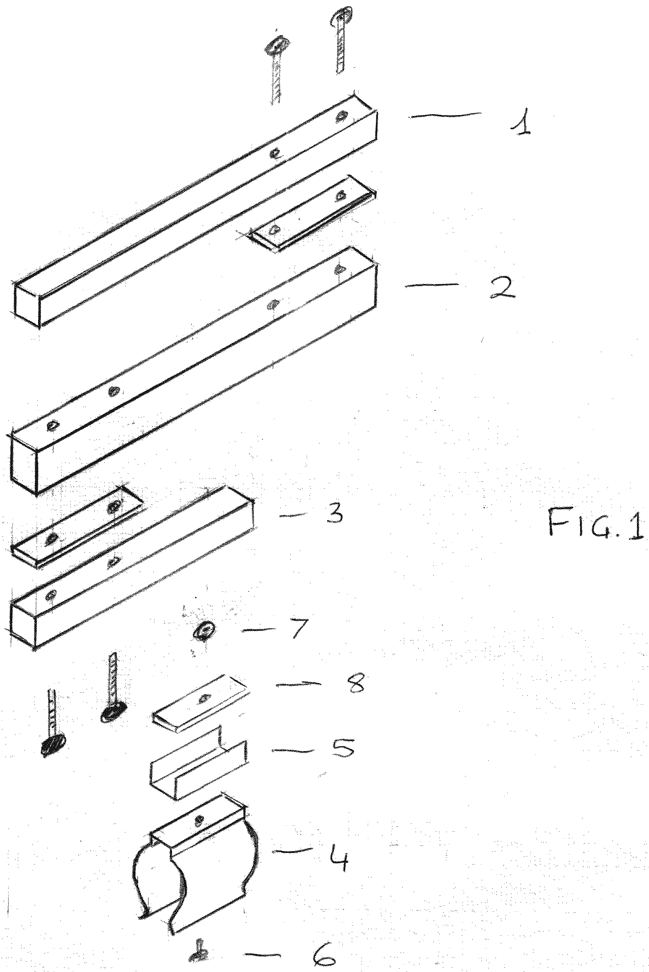

Brief description of drawings: on page ½ Fig. 1 shows an exploded view of the device; on page 2/2 Figure 2 shows the cross section of a typical round spring to be used for round handles; Figure 3 shows a cross section of a typical spring to be used with flat tools (such as a spanner).

Best mode for carrying out the invention: The present invention is hereafter further clarified, in a preferred embodiment thereof, given purely by way of non-limiting example, with reference to the attached drawings. The device main components are:
- a sensing unit, consisting of a force sensing unit and an arm measuring unit;
- a quick connection system;
- a processing and control unit. The sensing unit is coupled to the fastening tool by means of the quick connection system; it gathers electronic information relative to the force intensity and the measure of its lever arm; such signals are fed to the processing unit, to be then displayed on
- a digital screen. Power to all electronic components is supplied by a
- battery. In detail:
   Force sensing unit: a metal barrette (hand-side bar) (1) is bolted to one end of a load cell (2). On the opposite side of the cell a shorter barrette (tool-side bar) (3) is bolted to the other end of said load cell. Four electric wires connect the load cell to an electronic circuit on a PCB. The load cell allows to measure the force applied to the hand-side bar and transferred to the tool-side bar.

Arm measuring unit: a laser diode and its circuitry on said PCB allows to measure the distance from a reference line on the force sensing unit to the axis of the fastener (bolt, nut, etc.).

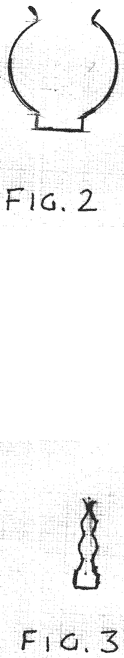

The quick connection system allows coupling of the sensing unit to the fastening tool so that the entire force participates in generating fastening torque. The system comprises: carbon steel springs (4) of various shape and size to couple the device to the different, in shape and size, fastening tool handles. Figure 2 shows the cross section of a typical spring to be used for round handles. Figure 3 shows a cross section of a typical spring to be used with flat tools (such as a spanner). Each of these springs is bolted to a spring clip (5) that clamps on the tool-side bar. The head of the bolt (6), being the only contact point between the force sensing unit and the fastening tool, uniquely defines the point of application of the force, thus the possibility of measuring the force arm with precision. The nut (7) on the clip side is sunk in a fairing spacer (8) between the clip and the tool-side bar.

Electronic processing unit: a processor on an electronic board (PCB) receives signals from the force sensing unit and from the arm measuring unit and feeds them to a smartphone application by means of a Bluetooth Low Energy (BLE) module.

Power supply: a battery powers the Electronic processing unit.

Note: The Force sensing unit, the Electronic processing unit and the battery are housed together in a plastic enclosure. A "window" in the enclosure allows the quick connection system clip to clamp the tool-side bar.

A dedicated smartphone application allows Bluetooth pairing with the device. After positive connection is established, selection of the appropriate operating mode by means of the touchscreen, the display will show: The lever arm, the value of which derives from the laser diode signal to the processing unit;

the instantaneous force, applied by the user, as detected by the sensing element;

the resulting instant torque, calculated by multiplying the force by its lever arm; and the target torque, set by the user.

In general, by defining any two of the three values: lever arm, force, target torque, the third value is readily displayed.

In addition to these basic indications, data can be organized to provide any further desirable information, such as, for instance, the torque applied in sequence to the bolts of an engine head.

## Claims

1. Device comprising at least one digital display on which the value of the torque produced by a force is shown,
at least one sensor (2) that detects the force intensity;
at least one subsystem that measures the actual lever arm of such force, wherever its point of application and/or the pivot point are located;
at least an electronic processor unit that receives and processes the information from said sensor and said subsystem, computes the resulting torque and shows its value on said digital display; and
at least an input device that allows the operator to enter known and target values and to select the preferred measuring units.

2. Device according to claim 1, **characterized in that** said digital display is not rigidly connected to said device.

3. Device according to one or more of the preceding claims, **characterized by** a coupling system which allows it to be rigidly attached to a fastening tool in a position such that the intensity of the force acting on said fastening tool is detected by said electronic force sensor.

4. Device according to claim 3, the coupling system of which is **characterized by** at least one spring clamp able to join together in a stable relative position said device and said tool.

5. Device according to claim 3 or 4 whose coupling system is **characterized by** the possibility of selecting the spring clamp that best matches the size of the fastening tool handle.

6. Device according to claim 1 whose electronic processing unit is **characterized in that** it is equipped with a communication port for system upgrade and electronic components calibration.

## Patentansprüche

1. Vorrichtung mit zumindest einer digitalen Anzeige, auf der der Wert des durch eine Kraft erzeugten Drehmoments angezeigt wird,
zumindest einem Sensor (2), der die Kraftintensität erfasst;
zumindest einem Subsystem, das den tatsächlichen Hebelarm dieser Kraft misst, unabhängig davon, wo sich ihr Angriffspunkt und/oder der Drehpunkt befindet;
zumindest einer elektronischen Verarbeitungseinheit, die die von dem Sensor und dem Subsystem empfangenen Informationen verarbeitet, das resultierende Drehmoment berechnet und dessen Wert auf der digitalen Anzeige anzeigt; und
zumindest einer Eingabeeinrichtung, die es dem Bediener ermöglicht, bekannte und Zielwerte einzugeben und die bevorzugten Maßeinheiten auszuwählen.

2. Vorrichtung nach Anspruch 1, **dadurch gekennzeichnet, dass** die digitale Anzeige nicht starr mit der Vorrichtung verbunden ist.

3. Vorrichtung nach einem oder mehreren der vorhergehenden Ansprüche, **gekennzeichnet durch** ein Kopplungssystem, das es ermöglicht, die Vorrichtung in einer Position starr an ein Befestigungswerkzeug anzubringen, so dass die auf das Befestigungswerkzeug wirkende Kraftintensität von dem elektronischen Kraftsensor erfasst wird.

4. Vorrichtung nach Anspruch 3, wobei das Kopplungssystem durch mindestens eine Federklemme gekennzeichnet ist, die geeignet ist, die Vorrichtung und das Werkzeug in einer stabilen relativen Position zu halten.

5. Vorrichtung nach Anspruch 3 oder 4, wobei das Kopplungssystem **dadurch gekennzeichnet ist, dass** eine Federklemme ausgewählt werden kann, die am besten zur Größe des Werkzeuggriffs passt.

6. Vorrichtung nach Anspruch 1, wobei die elektronische Verarbeitungseinheit **dadurch gekennzeichnet ist, dass** sie mit einer Kommunikationsschnittstelle für Systemaktualisierungen und die Kalibrierung der elektronischen Komponenten ausgestattet ist.

## Revendications

1. Dispositif comprenant au moins un affichage numérique sur lequel est indiquée la valeur du couple produit par une force,
au moins un capteur (2) détectant l'intensité de la force ;
au moins un sous-système mesurant le bras de levier réel de ladite force, quel que soit le point d'application et/ou le point de pivot ;
au moins une unité de traitement électronique qui reçoit et traite les informations provenant dudit capteur et dudit sous-système, calcule le couple résultant et affiche sa valeur sur ledit affichage numérique ; et
au moins un dispositif d'entrée permettant à l'opérateur de saisir des valeurs connues et cibles et de sélectionner les unités de mesure préférées.

2. Dispositif selon la revendication 1, **caractérisé en ce que** ledit affichage numérique n'est pas rigidement connecté audit dispositif.

3. Dispositif selon une ou plusieurs des revendications précédentes, **caractérisé par** un système de couplage permettant de le fixer rigidement à un outil de serrage dans une position telle que l'intensité de la force agissant sur ledit outil de serrage est détectée par ledit capteur de force électronique.

4. Dispositif selon la revendication 3, dans lequel le système de couplage est **caractérisé par** au moins une pince à ressort apte à maintenir dans une position relative stable ledit dispositif et ledit outil.

5. Dispositif selon la revendication 3 ou 4, dans lequel le système de couplage est **caractérisé par** la possibilité de sélectionner la pince à ressort la mieux adaptée à la dimension de la poignée de l'outil de serrage.

6. Dispositif selon la revendication 1, dans lequel l'unité de traitement électronique est **caractérisée en ce qu'**elle est équipée d'un port de communication pour la mise à jour du système et l'étalonnage des composants électroniques.
